# EUROPEAN PATENT SPECIFICATION

(11) **EP 2 300 904 B1**
(45) Date of publication and mention of the grant of the patent: **13.02.2013**
(21) Application number: 08750202.7
(22) Date of filing: 08.05.2008
(51) Int. Cl.: G06F 3/06

(54) **SYSTEM AND METHOD FOR SEQUENTIAL RECORDING AND ARCHIVING LARGE VOLUMES OF VIDEO DATA**
SYSTEM UND VERFAHREN ZUM SEQUENTIELLEN AUFZEICHNEN UND ARCHIVIEREN VON GROSSEN VOLUMEN AN VIDEODATEN
SYSTÈME ET PROCÉDÉ D'ENREGISTREMENT SÉQUENTIEL ET D'ARCHIVAGE DE GRANDS VOLUMES DE DONNÉES VIDÉO

(43) Date of publication of application: 30.03.2011
(73) Proprietor: V.S.K. Electronics, 8530 Harelbeke (BE)
(72) Inventor: VERHULST, Robert, B-8670 Koksijde (BE)
(74) Representative: Sarlet, Steven Renaat Irène
(86) International application number: PCT/EP2008/055708
(87) International publication number: WO 2009/135530

(56) References cited:
- WO-A-2006/030339
- US-A1- 2004 054 939
- US-A1- 2004 225 833
- US-A1- 2005 055 501
- US-B1- 7 152 142

## Description

### Technical field

The present invention relates to a data storage system and method for sequential recording and archiving large volumes of video data.

### Background art

Modern hard disk drives are generally very reliable for typical data storage applications. However, for data-intensive storage applications such as digital video recording systems in large buildings, shopping malls, airports and the like, which are data-intensive applications in which data is captured at an input rate which may vary to a large extent, the hard disk drives are stressed to their limit such that there is a high risk of occurrence of a disk failure. In fact, that it is generally accepted by those skilled in the art that the hard disk is the weakest point in the reliability of any larger disk-based data storage system. When large quantities of disks are used, the likelihood of a drive failure occurring is increased in direct proportion to the number of drives present.

As the recorded data can be of critical importance and may need to be kept for evidential purposes, conventional solutions for providing high data integrity involve the use of disk arrays, e.g. a Redundant Array of Inexpensive Disks (RAID), with some form of redundancy e.g. mirroring, parity schemes etc. For example, RAID 5 use an array of n hard disks to provide an effective array of n-1 hard disks, with parity data from each disk being spread across all the other drives in a predefined pattern. In the event of a failure of one of the disks, the data on the failed disk is regenerated on the basis of the parity data. However, such a system requires that all the disks of the array are continuously in operation, since the parity data is spread. This may lead to excessive heat dissipation, noise, multiple read/write operations on the disks, all which may increase the risk of a disk failure. It is further known in the art that most hard disk failures occur during write operations, as writing data involves actively changing the magnetic state of the recording surface.

A system and method for sequential recording of large volumes of data is known from WO-A-2007/110577. The sequential recording process involves the starting up of a hard disk for recording data, recording data on this disk up to its complete capacity and only when the complete capacity is nearly reached starting up a second hard disk for recording data. Once the writing on the first disk is completed, this one is stopped. In this way substantially only a single hard disk is in operation at a time. The system however has the disadvantage that the rate at which data can be recorded is restricted, making the system unreliable.

A RAID-based system and method for sequential recording of large volumes of data is known from US-B-7,152,142.

### Disclosure of the invention

It is an aim of this invention to provide a more reliable system and method for sequential recording and archiving large volumes of video data.

This aim is achieved with the system and method of the independent claims.

The data storage system according to the invention comprises a plurality of data recording devices arranged in arrays. Each array comprises a server and a number of data recording devices connected to the server. Each array is capable of sequentially recording data which is supplied to the array via its server at an input rate below a given maximum input rate, which is defined by the specifications of the devices of the array. The system further comprises a network switch as an interface between the arrays of data recording devices and a network of data capturing devices, e.g. video cameras, in which data is captured. Depending on the circumstances, e.g. the time of day, the volume of data captured and to be recorded may vary to a large extent, so that there is a variable overall data capturing rate. For example, in case of video cameras which are triggered by movement sensors, these will usually capture a lot more activity during daytime than during nighttime. The network switch transfers the stream of captured data to the arrays of data recording devices.

According to the invention, the servers of the arrays are each provided with monitoring means for monitoring the input rate of the respective array with respect to its maximum input rate. Further, the servers are communicatively linked to each other and at least one of the servers is provided for functioning as a controller for controlling at least one other of the servers and assigning part of the stream of captured data to the at least one other server in response to its monitoring means. In other words, at least some of the servers are communicatively linked in a master-slave configuration, where one master-server controls the operation of one or more slave-servers.

An analysis of the prior art has shown that the reliability is affected, in the case of RAID systems, by the fact that many recording devices are continuously and simultaneously in operation, which generates heat, noise, vibrations and like disadvantages, and in the case of the known sequential recording system, by the fact that only a single recording device is in operation, which restricts the data volume which can be handled and risks that in cases of high input data may be lost. In the system of the invention, the input rate through each of the (active) servers is monitored and a subsequent array is started up in case the overall rate at which data is captured exceeds the sum of the maximum input rates of the arrays currently in operation. In this way, the system of the invention can be applied even when the overall rate at which data is captured varies to a large extent, while still employing a sequential recording process, so still avoiding the disadvantages of heat, noise and vibrations which occur when many recording devices are in operation at the same time. Since this monitoring and control process is performed under control of a single server, the need for a separate controller as overhead for all the servers of all the arrays can be avoided. In other words, the need for additional hardware which could fail is avoided. Furthermore, each of the components in the array can be a universal, non-proprietary hardware element. This shows that the system of the invention can improve the reliability in many aspects.

As used herein, with "sequential recording" is intended to mean a recording process in an array of data recording devices which comprises the successive steps of starting up a first of the recording devices of the respective array, recording a data stream onto the first recording device up to substantially its complete storage capacity, starting up a second of the recording devices of the respective array shortly before the first recording device reaches its complete storage capacity, recording the data stream onto the second recording device and stopping the first recording device after reaching its complete storage capacity. So the sequential recording process has the advantage that only a single or a small number of data recording devices of a whole array is in operation at the same time.

Preferably, it is provided in the system of the invention that one of the servers under control of the master-server is provided for taking over control in case of failure of the master-server. In this way, reliability can be further ensured.

Preferably, the system according to the invention comprises a second network switch as an interface between the arrays of data recording devices and the network of data capturing devices, the second network switch being provided for taking over operation of the first network switch in case of failure of the latter. In this way, reliability can be further ensured.

Preferably, the data recording devices of each array are grouped in a storage unit, each data recording device being included in a cartridge which is removable from the storage unit and has a label carrying an identifier for archiving purposes, the identifier being also inscribed on the data recording device. In this way, data recording devices which have been recorded up to their capacity can be easily removed from the system and stored in an archive and be easily retrieved later on. The inscription of the identifier of the label on the data recording device itself is another way of ensuring reliability. The label can for example be an RF-ID label, which can be scanned by means of a suitable scanning device, so that the archived data recording devices can be easily and quickly retrieved if necessary.

According to the invention, the data recording devices may be hard disks, non-volatile memory devices or any other data recording devices known to the person skilled in the art.

According to the invention, the stream of captured data is simultaneously transferred to a first and a second group, each comprising at least one of the arrays of data recording devices, so that the second group records a mirror of the data recorded by the first group. In this way, redundant data is present in case of failure of a whole group of arrays of data recording devices, so that reliability can be further ensured. Given that for video information, the image capturing rate of present-day cameras is relatively high, the video data stream is split up into two half-streams which are alternatingly recorded in the first and second groups. This means that the video data stream is split up in such a way that for every image recorded in the first group, the immediately subsequent image is recorded in the second group. Provided that the image capturing rate of the cameras is sufficient, loss of one half of the video data is not critical and the remaining half can still provide sufficient data for evidence purposes.

### Brief description of the drawings

The invention will be further elucidated by means of the following description and the appended drawings.
Figure 1 shows a general overview of a preferred embodiment of the data storage system according to the invention.
Figure 2 shows a detail of a storage unit holding an array of data recording devices.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

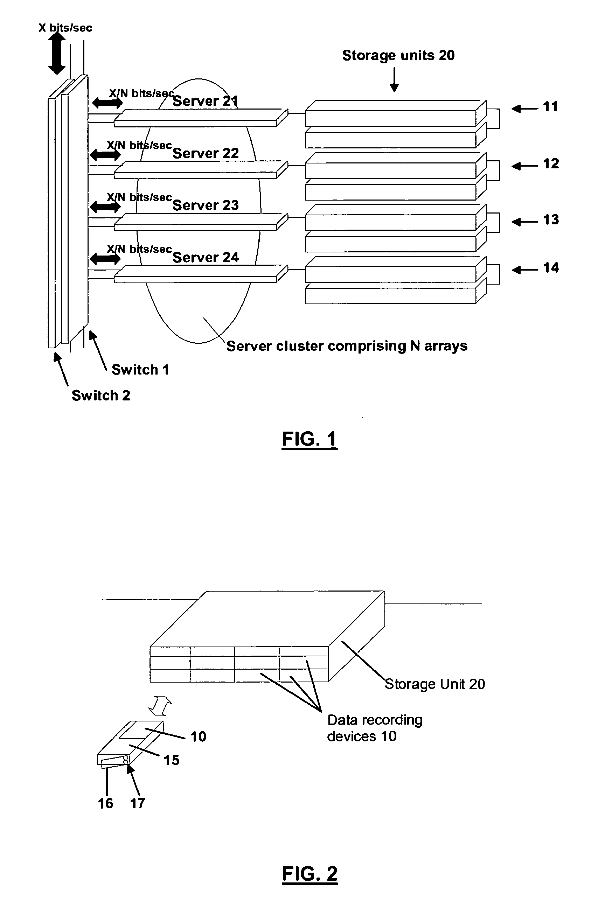

The data storage system shown in figure 1 is provided for sequentially recording and archiving large volumes of video data. It comprises a plurality of data recording devices 10 arranged in arrays 11-14. Each array comprises a server 21-24 and a number of data recording devices 10 connected to the server, in the figure two storage units 20 with twelve data recording devices 10 each, but any other number of storage units 20 and data recording devices 10 per unit is also possible. Each array 11-14 is provided for sequentially recording data which is supplied to the array via its server 21-24 at an input rate below a given maximum input rate, which is specified by the specifications of the components of the respective array.

The system further comprises a pair of network switches 1, 2 as interfaces between the arrays 11-14 of data recording devices and a network of data capturing devices (not shown) in which data is captured at a variable overall data capturing rate, e.g. a network of video cameras. The switches 1, 2 are provided for transferring the stream of captured data coming from the network of data capturing devices to the arrays 11-14 of data recording devices 10.

The servers 21-24 of the arrays are each provided with monitoring means (not shown) for monitoring the input rate of the respective array with respect to its maximum input rate. The servers are communicatively linked to each other for the purpose that one of the servers can function as a controller for the other servers. In this way, when the input rate towards the controller server exceeds the maximum input rate, as will be indicated by its monitoring means, the controller server can assign part of the incoming stream of captured data to one of the other servers. In other words, the controller server operates as a master for the other servers which operate as slaves.

In the system of figure 1, any of the servers 11-14 can be the master at any given time, depending on the circumstances. In any case, it is provided that if the master server fails, one of the slaves automatically takes over the master function. The master server further controls the partial data streams to each of the active branches in such a way that the load is balanced. In the situation shown, the incoming stream of captured data at the network switches is a stream of X bits/sec which is equally distributed over all four branches 11-14. So the input rate through each of the servers is X/N bits/sec with N=4. Since all four branches are in operation in the situation shown, this means that the data rate X of the incoming data stream is above three times the maximum input rate of the branches (assuming that the maximum input rate is equal for all branches).

As shown in figure 2, the data recording devices 10 of each array/branch 11-14 are grouped in a storage unit 20, which is connected to the server of the branch via a storage bus 19, e.g. a SAS. A single or dual connection can be built up between server 11-14 and the data recording devices 10 of the respective array, so that the server can create two chains of successive data recording devices 10 even within a single storage unit if desired, so a dual sequential recording process within a single array.

Each data recording device 10, e.g. a SATA II hard disk, is included in a cartridge 15 which is removable from the storage unit 20 and has an RF-ID label 16 carrying an identifier for archiving purposes. This identifier is also inscribed on the data recording device 10, preferably in an encrypted form. In this way, any data recording device 10 which has been inscribed up to substantially its full capacity can be removed from the storage unit 20 and stored in an archive, while remaining in its cartridge 15. By means of the RF-ID label and a suitable inventory, it can later on easily be checked which data has been inscribed on which storage device. The retrieval of the desired storage device 10 at a later stage, e.g. years later, can then be quickly and easily performed by means of a suitable scanning device for scanning the RF-ID labels. The inscription of the identifier on the respective device 10 as ensures reliability in case the RF-ID label should fail.

Instead of one data recording device, each cartridge 15 may also hold multiple data recording devices.

Next to the RF-ID label 16, LED status indicators 17 are provided on the cartridge 15. These may for example indicate the following states: "ready" (ready for inscription), "active" (currently being inscribed), "ready for removal" (inscribed up to capacity) and/or "fail". The removal of a cartridge from the storage unit is preferably only allowed after a manual confirmation from a management platform. Preferably, a write protection is activated once the storage device is fully inscribed or removed, such that upon reinsertion of a storage device the data on it is read-only.

The data recording devices 10 may be hard disks, non-volatile memory devices, or any other type of data storage device known to the person skilled in the art.

The data recording devices 10 are preferably each formatted with their own file system, such that they can individually function as an archive. The file system has a particular file structure and is autonomous. The file structure permits storage of different external formats and at the same time holds information concerning origin of access as well as time of writing, reading and last permitted read per data stream.

The data storage system of figure 1 is operated as follows. A stream of captured data is transferred via the active network switch 1 or 2 to the arrays 11-14 of data recording devices 10. A first of the arrays, e.g. 11 is started up the stream of captured data is sequentially recorded onto the data recording devices of the first array 11. By means of its monitoring means, the server 21 monitors the input rate towards the first array 11 with respect to the maximum input rate of this first array 11. As soon as the input rate exceeds the maximum input rate, the server 21 acts as a controller for a second server 22 of a second array 12 to start up this array and assign part of the stream of captured data to the second array 12. Preferably, the data stream is redistributed in such a way that both arrays 11, 12 carry substantially the same load. As soon as the input rate towards the first or second array exceeds the maximum input rate of the respective array, a third array 13 is started up, the load is redistributed and so on. Should the monitoring means of the servers indicate that the input rate has dropped below a given, predetermined value indicating that one of the arrays can be shut down, the controller server 21 shuts down the respective array 12, 13 or 14 to ensure that at all times the least possible number of data recording devices 10 is in operation.

In order to ensure reliability, it is preferred that should one of the servers fail, the data stream which was assigned to this array is substantially immediately reassigned to another server, such that the risk of data loss can be avoided. Likewise, it is preferably provided that operation of the one network switch is transferred to the other network switch in case of failure of the first one.

In the system of figure 1, the stream of captured data is simultaneously transferred to a first and a second group, each comprising at least one of the arrays of data recording devices. Consider for example arrays 11 and 12 to form a first group and arrays 13 and 14 to form a second group. The second group is provided to record a mirror of the data recorded by the first group. In this way, redundant data is present in case of failure of a whole group of arrays of data recording devices, so that reliability can be further ensured. Given that for video information, the image capturing rate of present-day cameras is relatively high, the video data stream is split up into two half-streams which are alternatingly recorded in the first and second groups. This means that the video data stream is split up in such a way that for every image recorded in the first group 11-12, the immediately subsequent image is recorded in the second group 13-14. Provided that the image capturing rate of the cameras is sufficient, loss of one half of the video data is not critical and the remaining half can still provide sufficient data for evidence purposes.

To sum up, the system of figure 1 shows the following advantages:
- high performance and reliable data storage for huge volumes with a file system per individual storage device 10,
- due to the fact that a storage device has its own file system it can be used as an archive,
- interactivity between different branches/arrays allows taking over of data streams as well as realizing auto-load balancing,
- each branch/array of a storage cluster allows one or dual connection to the data network (ex. Ethernet),
- a single or dual connection can be built up between server 11-14 and the data recording devices 10 of the respective array,
- RF-ID tagging of data recording devices with unique ID for archive retrieval.

## Claims

1. Video data storage system for sequentially recording and archiving large volumes of video data, comprising
- a plurality of data recording devices (10) arranged in arrays (11-14), each array comprising a server (21-24) and a number of said data recording devices (10) connected to the server, each array being provided for sequentially recording data which is supplied to the array via its server at an input rate below a given maximum input rate,
- and a network switch (1) as an interface between the arrays of data recording devices (10) and a network of data capturing devices in which video data is captured at a variable overall data capturing rate, the switch (1) being provided for transferring a stream of captured video data to the arrays (11-14) of data recording devices (10),
- wherein the servers (21-24) are communicatively linked to each other,
**characterised in that**
- at least one of the servers (21) is provided for functioning as a controller for controlling at least one of the other servers (22-24);
- the servers (21-24) of the arrays (11-14) are each provided with monitoring means for monitoring the input rate of the respective array with respect to its maximum input rate;
- the controller is provided for assigning part of the stream of captured video data to the at least one other server (22-24) in response to its monitoring means;
- each of the data recording devices (10) is formatted with their own file system, such that they can individually function as an archive,
- the system is provided for splitting the captured video data into two substreams, and for recording the substreams in a first and a second group of at least one of said arrays (11-14) of data recording devices (10), such that for every image of the captured video data recorded in the first group, the immediately subsequent image of the captured video data is recorded in the second group.

2. Video data storage system according to claim 1, **characterised in that** one of the other servers (22-24) is provided for taking over control in case of failure of the server (21) initially controlling the other servers.

3. Video data storage system according to claim 1, **characterised in that** the system comprises a second network switch (2) as an interface between the arrays (11-14) of data recording devices (10) and the network of data capturing devices, the second network switch (2) being provided for taking over operation of the first network switch (1) in case of failure.

4. Video data storage system according to claim 1, **characterised in that** the data recording devices (10) of each array (11-14) are grouped in a storage unit (20), each data recording device (10) being included in a cartridge (15) which is removable from the storage unit (20) and has a label (16) carrying an identifier for archiving purposes, the identifier being also inscribed on the data recording device (10).

5. Video data storage system according to claim 4, **characterised in that** the label is an RF-ID label (16).

6. Video data storage system according to claim 1, **characterised in that** each data recording device (10) is provided with a write protection means.

7. Video data storage system according to any one of the previous claims, **characterised in that** at least some of the data recording devices (10) are hard disks.

8. Video data storage system according to any one of the previous claims, **characterised in that** at least some of the data recording devices (10) are non-volatile memory devices.

9. Method for sequentially recording and archiving large volumes of video data onto the video data storage system according to any one of the previous claims, the method comprising the steps of:
a0) formatting each of the data recording devices (10) with their own file system, such that they can individually function as an archive,
a) transferring the stream of captured video data via said network switch (1) to the arrays (11-14) of data recording devices (10), wherein the stream of captured video data is simultaneously transferred to a first and a second group of at least one of said arrays (11-14) of data recording devices, whereby said images are alternatingly transferred to the first group and the second group,
b) in each group starting up a first (11) of said arrays and sequentially recording said captured video data onto the data recording devices of the first array,
c) in each group monitoring the input rate at the server (21) of the first array (11) with respect to the maximum input rate of the first array (11),
d) in each group, if the input rate exceeds the maximum input rate, starting up a second (12) of said arrays under control of the server (21) of the first array and assigning part of the stream of captured video data to the second array (12).

10. Method according to claim 9, **characterised in that** step d) comprises:
e) starting up said second array (12),
f) splitting said stream of captured video data into a first data substream and a second data substream,
g) sequentially recording the first data substream onto the data recording devices of the first array (11),
h) sequentially recording the second data substream onto the data recording devices of the second array (12).

11. Method according to any one of the claims 9-10, **characterised in that** said sequential recording comprises the successive steps of starting up only a first of the recording devices (10) of the respective array, recording the captured video data onto said first recording device up to its complete storage capacity, starting up only a second of the recording devices of the respective array shortly before the first recording device reaches its complete storage capacity, recording the captured video data onto said second recording device and stopping the first recording device after reaching its complete storage capacity.

12. Method according to any one of the claims 9-11, further comprising the steps of, for each group:
i) in case of failure of the server (21) of the first array (11), transferring control to the server (22) of the second array (12),
j) starting up a third (13) of said arrays (11-14) under control of the server (22) of the second array (12) and assigning the part of the stream of captured video data previously assigned to the first array (11) to the third array (13).

13. Method according to any one of the claims 9-12, further comprising the step of transferring operation of the first network switch (1) to the second network switch (2) in case of failure of the first network switch (1).

## Patentansprüche

1. Videodaten-Speichersystem zum sequentiellen Aufzeichnen und Archivieren großer Volumen von Videodaten, umfassend:
- mehrere Datenaufzeichnungsvorrichtungen (10), die in Feldern (11 bis 14) angeordnet sind, wobei jedes Feld einen Server (21 bis 24) und eine Anzahl der Datenaufzeichnungsvorrichtungen (10) umfasst, die mit dem Server verbunden sind, wobei jedes Feld für ein sequentielles Aufzeichnen von Daten bereitgestellt ist, welche dem Feld über dessen Server mit einer Eingabegeschwindigkeit unterhalb einer maximalen Eingabegeschwindigkeit zugeführt werden,
- und einen Netzwerkschalter (1) als Schnittstelle zwischen den Feldern der Datenaufzeichnungsvorrichtungen (10) und einem Netzwerk von Datenerfassungsvorrichtungen, in welchen Videodaten in einer variablen Gesamt-Datenerfassungsgeschwindigkeit erfasst werden, wobei der Schalter (1) zum Übermitteln eines Stroms erfasster Videodaten an die Felder (11 bis 14) der Datenaufzeichnungsvorrichtungen (10) bereitgestellt ist,
- wobei die Server (21 bis 24) zum Datenaustausch miteinander verbunden sind,
**dadurch gekennzeichnet, dass**
- mindestens einer der Server (21) dafür bereitgestellt ist, als Steuerelement zum Steuern mindestens eines der anderen Server (22 bis 24) zu fungieren;
- die Server (21 bis 24) der Felder (11 bis 14) jeweils mit Überwachungsmitteln zum Überwachen der Eingabegeschwindigkeit des entsprechenden Feldes in Bezug auf dessen maximale Eingabegeschwindigkeit versehen sind;
- jede der Datenaufzeichnungsvorrichtungen (10) mit ihrem eigenen Dateisystem formatiert ist, so dass sie individuell als Archiv fundieren kann,
- das System dafür bereitgestellt ist, die erfassten Videodaten in zwei Teilströme aufzuteilen und die Teilströme in einer ersten und einer zweiten Gruppe mindestens eines der Felder (11 bis 14) der Datenaufzeichnungsvorrichtungen (10) aufzuzeichnen, so dass für jedes Bild der erfassten Videodaten, das in der ersten Gruppe aufgezeichnet wird, das unmittelbar folgende Bild der erfassten Videodaten in der zweiten Gruppe aufgezeichnet wird.

2. Videodaten-Speichersystem nach Anspruch 1, **dadurch gekennzeichnet, dass** einer der anderen Server (22 bis 24) dafür bereitgestellt ist, im Fall eines Fehlers des Servers (21), der die anderen Server anfänglich steuert, die Steuerung zu übernehmen.

3. Videodaten-Speichersystem nach Anspruch 1, **dadurch gekennzeichnet, dass** das System einen zweiten Netzwerkschalter (2) als Schnittstelle zwischen den Feldern (11 bis 14) der Datenaufzeichnungsvorrichtungen (10) und dem Netzwerk der Datenerfassungsvorrichtungen umfasst, wobei der zweite Netzwerkschalter (2) dafür geeignet ist, im Fall eines Fehlers den Betrieb des ersten Netzwerkschalters (1) zu übernehmen.

4. Videodaten-Speichersystem nach Anspruch 1, **dadurch gekennzeichnet, dass** die Datenaufzeichnungsvorrichtungen (10) jedes Feldes (11 bis 14) in einer Speichereinheit (20) gruppiert sind, wobei jede Datenaufzeichnungsvorrichtung (10) in einem Einsatz (15) enthalten ist, der aus der Speichereinheit (20) entfernbar ist und ein Etikett (16) aufweist, welches eine Kennung für Archivierungszwecke trägt, wobei auch die Datenaufzeichnungsvorrichtung (10) mit der Kennung beschriftet ist.

5. Videodaten-Speichersystem nach Anspruch 4, **dadurch gekennzeichnet, dass** es sich bei dem Etikett um ein RF-ID-Etikett (16) handelt.

6. Videodaten-Speichersystem nach Anspruch 1, **dadurch gekennzeichnet, dass** jede Datenaufzeichnungsvorrichtung (10) mit einem Schreibschutzmittel versehen ist.

7. Videodaten-Speichersystem nach einem der vorhergehenden Ansprüche, **dadurch gekennzeichnet, dass** zumindest einige der Datenaufzeichnungsvorrichtungen (10) Festplatten sind.

8. Videodaten-Speichersystem nach einem der vorhergehenden Ansprüche, **dadurch gekennzeichnet, dass** zumindest einige der Datenaufzeichnungsvorrichtungen (10) nichtflüchtige Speichervorrichtungen sind.

9. Verfahren zum sequentiellen Aufzeichnen und Archivieren großer Volumen von Videodaten auf dem Videodaten-Speichersystem nach einem der vorhergehenden Ansprüche, wobei das Verfahren die folgenden Schritte umfasst:
a0) Formatieren jeder der Datenaufzeichnungsvorrichtungen (10) mit ihrem eigenen Dateisystem, so dass sie individuell als Archiv fungieren können,
a) Übermitteln des Stroms der erfassten Videodaten über den Netzwerkschalter (1) an die Felder (11 bis 14) der Datenaufzeichnungsvorrichtungen (10), wobei der Strom der erfassten Videodaten gleichzeitig an eine erste und eine zweite Gruppe mindestens eines der Felder (11 bis 14) der Datenaufzeichnungsvorrichtungen (10) übermittelt wird, wobei die Bilder abwechselnd an die erste Gruppe und die zweite Gruppe übermittelt werden,
b) in jeder Gruppe Einschalten eines ersten (11) der Felder und sequentielles Aufzeichnen der erfassten Videodaten auf den Datenaufzeichnungsvorrichtungen (10) des ersten Feldes,
c) in jeder Gruppe Überwachen der Eingabegeschwindigkeit am Server (21) des ersten Feldes (11) in Bezug auf die maximale Eingabegeschwindigkeit des ersten Feldes (11),
d) in jeder Gruppe Einschalten eines zweiten (12) der Felder unter der Steuerung durch den Server (21) des ersten Feldes und Zuordnen eines Teils des Stroms der erfassten Videodaten zu dem zweiten Feld (12), wenn die Eingabegeschwindigkeit die maximale Eingabegeschwindigkeit übersteigt.

10. Verfahren nach Anspruch 9, **dadurch gekennzeichnet, dass** der Schritt d) das Folgende umfasst:
e) Einschalten des zweiten Feldes (12),
f) Aufteilen des Stroms der erfassten Videodaten in einen ersten Datenteilstrom und einen zweiten Datenteilstrom,
g) sequentielles Aufzeichnen des ersten Datenteilstroms auf den Datenaufzeichnungsvorrichtungen des ersten Feldes (11),
h) sequentielles Aufzeichnen des zweiten Datenteilstroms auf den Datenaufzeichnungsvorrichtungen des zweiten Feldes (12).

11. Verfahren nach einem der Ansprüche 9 bis 10, **dadurch gekennzeichnet, dass** das sequentielle Aufzeichnen die aufeinander folgenden Schritte des Einschaltens nur einer ersten der Aufzeichnungsvorrichtungen (10) des entsprechenden Feldes, des Aufzeichnens der erfassten Videodaten auf der ersten Aufzeichnungsvorrichtung bis zu ihrer vollen Speicherkapazität, des Einschaltens nur einer zweiten der Aufzeichnungsvorrichtungen des entsprechenden Feldes, kurz bevor die erste Aufzeichnungsvorrichtung ihre volle Speicherkapazität erreicht, des Aufzeichnens der erfassten Videodaten auf der zweiten Aufzeichnungsvorrichtung und des Stoppens der ersten Aufzeichnungsvorrichtung umfasst, nachdem sie ihre volle Speicherkapazität erreicht hat.

12. Verfahren nach einem der Ansprüche 9 bis 11, welches für jede Gruppe ferner die folgenden Schritte umfasst:
i) Übertragen der Steuerung auf den Server (22) des zweiten Feldes (12) im Fall eines Fehlers des Servers (21) des ersten Feldes (11),
j) Einschalten eines dritten (13) der Felder (11 bis 14) unter Steuerung des Servers (22) des zweiten Feldes (12) und Zuordnen des Stroms der erfassten Videodaten, der zuvor dem ersten Feld (11) zugeordnet war, zu dem dritten Feld (13).

13. Verfahren nach einem der Ansprüche 9 bis 12, welches ferner den Schritt des Übertragens des Betriebs des ersten Netzwerkschalters (1) auf den zweiten Netzwerkschalter (2) im Fall eines Fehlers des ersten Netzwerkschalters (1) umfasst.

## Revendications

1. Système de stockage de données vidéo pour enregistrer séquentiellement et archiver de gros volumes de données vidéo, comprenant
- une pluralité de dispositifs d'enregistrement de données (10) disposés en ensembles (11-14), chaque ensemble comprenant un serveur (21-24) et un nombre desdits dispositifs d'enregistrement de données (10) connectés au serveur, chaque ensemble étant prévu pour enregistrer séquentiellement des données qui sont fournies à l'ensemble par l'intermédiaire de son serveur à un taux d'entrée inférieur à un taux d'entrée maximal donné,
- et un commutateur de réseau (1) en tant qu'une interface entre les ensembles de dispositifs d'enregistrement de données (10) et un réseau de dispositifs de capture de données dans lequel des données vidéo sont capturées à un taux de capture de données global variable, le commutateur (1) étant prévu pour transférer un flux de données vidéo capturées aux ensembles (11-14) de dispositifs d'enregistrement de données (10),
- dans lequel les serveurs (21-24) sont liés les uns aux autres de manière à communiquer,
**caractérisé en ce que**
- au moins un des serveurs (21) est prévu pour fonctionner comme un contrôleur pour contrôler au moins un des autres serveurs (22-24),
- les serveurs (21-24) des ensembles (11-14) sont pourvus chacun de moyens de surveillance pour surveiller le taux d'entrée de l'ensemble concerné pour ce qui est de son taux d'entrée maximal ;
- le contrôleur est prévu pour assigner une partie du flux de données vidéo capturées audit au moins un autre serveur (22-24) en réponse à ses moyens de surveillance ;
- chacun des dispositifs d'enregistrement de données (10) est formaté avec son propre système de fichiers, de sorte qu'ils peuvent fonctionner individuellement comme une archive ;
- le système est prévu pour diviser les données vidéo capturées en deux sous-flux et pour enregistrer les sous-flux dans un premier et un deuxième groupe d'au moins un desdits ensembles (11-14) de dispositifs d'enregistrement de données (10), de sorte que pour chaque image des données vidéo capturées enregistrée dans le premier groupe, l'image immédiatement subséquente des données vidéo capturées est enregistrée dans le deuxième groupe.

2. Système de stockage de données vidéo selon la revendication 1, **caractérisé en ce qu'**un des autres serveurs (22-24) est prévu pour prendre en charge le contrôle en cas de panne du serveur (21) contrôlant initialement les autres serveurs.

3. Système de stockage de données vidéo selon la revendication 1, **caractérisé en ce que** le système comprend un deuxième commutateur de réseau (2) en tant qu'interface entre les ensembles (11-14) de dispositifs d'enregistrement de données (10) et le réseau de dispositifs de capture de données, le deuxième commutateur de réseau (2) étant prévu pour prendre en charge l'activité du premier commutateur de réseau (1) en cas de panne.

4. Système de stockage de données vidéo selon la revendication 1, **caractérisé en ce que** les dispositifs d'enregistrement de données (10) de chaque ensemble (11-14) sont groupés en une unité de stockage (20), chaque dispositif d'enregistrement de données (10) étant inclus dans une cartouche (15) qui peut être retirée de l'unité de stockage (20) et a une étiquette (16) portant un identifiant à des fins d'archivage, l'identifiant étant également inscrit sur le dispositif d'enregistrement de données (10).

5. Système de stockage de données vidéo selon la revendication 4, **caractérisé en ce que** l'étiquette est une étiquette RF-ID.

6. Système de stockage de données vidéo selon la revendication 1, **caractérisé en ce que** chaque dispositif d'enregistrement de données (10) est pourvu d'un moyen de protection en écriture.

7. Système de stockage de données vidéo selon l'une quelconque des revendications précédentes, **caractérisé en ce qu'**au moins certains des dispositifs d'enregistrement de données (10) sont des disques durs.

8. Système de stockage de données vidéo selon l'une quelconque des revendications précédentes, **caractérisé en ce qu'**au moins certains des dispositifs d'enregistrement de données (10) sont des dispositifs de mémoire non volatile.

9. Procédé pour enregistrer séquentiellement et archiver de gros volumes de données vidéo sur le système de stockage de données vidéo selon l'une quelconque des revendications précédentes, le procédé comprenant les étapes consistant à :
A0) formater chacun des dispositifs d'enregistrement de données (10) avec son propre système de fichiers de sorte qu'ils peuvent fonctionner individuellement comme une archive,
a) transférer le flux de données vidéo capturées par l'intermédiaire dudit commutateur de réseau (1) aux ensembles (11-14) de dispositif d'enregistrement de données (10), dans lequel le flux de données vidéo capturées est transféré simultanément à un premier et un deuxième groupe d'au moins un desdits ensemble (11-14) de dispositifs d'enregistrement de données, lesdites images étant transférées en alternance au premier groupe et au deuxième groupe,
b) démarrer dans chaque groupe un premier (11) desdits ensembles et enregistrer séquentiellement lesdites données vidéo capturées sur les dispositifs d'enregistrement de données du premier ensemble,
c) surveiller dans chaque groupe le taux d'entrée au niveau du serveur (21) du premier ensemble (11) pour ce qui est du taux d'entrée maximal du premier ensemble (11),
d) démarrer dans chaque groupe, si le taux d'entrée dépasse le taux d'entrée maximal, un deuxième (12) desdits ensembles sous le contrôle du serveur (21) du premier ensemble et assigner une partie du flux de données vidéo capturées au deuxième ensemble (12).

10. Procédé selon la revendication 9, **caractérisé en ce que** l'étape d) comprend :
e) démarrer ledit deuxième ensemble (12),
f) diviser ledit flux de données vidéo capturées en un premier sous-flux de données et un deuxième sous-flux de données,
g) enregistrer séquentiellement le premier sous-flux de données sur les dispositifs d'enregistrement de données du premier ensemble (11),
h) enregistrer séquentiellement le deuxième sous-flux de données sur les dispositifs d'enregistrement de données du deuxième ensemble (12).

11. Procédé selon l'une quelconque des revendications 9 - 10, **caractérisé en ce que** ledit enregistrement séquentiel comprend les étapes successives consistant à démarrer seulement un premier des dispositifs d'enregistrement (10) de l'ensemble concerné, à enregistrer les données vidéo capturées sur ledit dispositif d'enregistrement jusqu'à sa capacité complète de stockage, à démarrer un deuxième des dispositifs d'enregistrement de l'ensemble concerné seulement juste avant que le premier dispositif d'enregistrement atteigne sa capacité complète de stockage, à enregistrer les données vidéo capturées sur ledit deuxième dispositif d'enregistrement et à stopper le premier dispositif d'enregistrement après qu'il a atteint sa capacité complète de stockage.

12. Procédé selon l'une quelconque des revendications 9 - 11, comprenant en outre les étapes consistant, pour chaque groupe :
i) à transférer, en cas de panne du serveur (21) du premier ensemble (11), le contrôle au serveur (22) du deuxième ensemble (12),
j) à démarrer un troisième (13) desdits ensembles (11-14) sous le contrôle du serveur (22) du deuxième ensemble (12) et à assigner la partie du flux de données vidéo capturées assignées précédemment au premier ensemble (11) au troisième ensemble (13).

13. Procédé selon l'une quelconque des revendications 9 - 12, comprenant en outre l'étape consistant à transférer l'activité du premier commutateur de réseau (1) au deuxième commutateur de réseau (2) en cas de panne du premier commutateur de réseau (1).
